# EUROPÄISCHE PATENTSCHRIFT

(11) **EP 0 374 574 B1**
(45) Veröffentlichungstag und Bekanntmachung des Hinweises auf die Patenterteilung: **23.03.1994**
(21) Anmeldenummer: 89122365.3
(22) Anmeldetag: 05.12.1989
(51) Int. Cl.: H04L 12/56

(54) **Modular erweiterbares digitales einstufiges Koppelnetz in ATM (Asynchronous Transfer Mode) -Technik für eine schnelle paketvermittelte Informationsübertragung**
Modular expandable single stage digital ATM switching network for high speed packet-switched information transfer
Réseau de commutation numérique à un étage à technique ATM (Asynchronous Transfer Mode) extensible par modules pour transmission d'information de paquets commutés à grande vitesse

(30) Priorität: 23.12.1988 DE 3843726
(43) Veröffentlichungstag der Anmeldung: 27.06.1990
(73) Patentinhaber: SIEMENS AKTIENGESELLSCHAFT, 80333 München (DE)
(72) Erfinder: Lobijinski, Manfred, Dr., D-8000 München 80 (DE); Horn, Michael, Dipl.-Ing., D-8000 München 90 (DE); Hinterberger, Christian, Dipl.-Ing., D-8150 Holzkirchen (DE)

(56) Entgegenhaltungen:
- EP-A- 0 256 702
- EP-A- 0 292 962

## Beschreibung

Die vorliegende Erfindung bezieht sich auf ein modular erweiterbares digitales einstufiges Koppelnetz in ATM (Asynchronous Transfer Mode) - Technik für eine schnelle paketvermittelte Informationsübertragung, mit zwei Typen von vollvermittelnden Koppel-Moduln, die jeweils mit einer Vielzahl N von Ersteingängen, einer Vielzahl N x L von Erweiterungseingängen, einer Vielzahl N bzw. N x L von Erstausgängen und einer Vielzahl N von Erweiterungsausgängen versehen sind, wobei die Koppel-Moduln matrixförmig derart angeordnet sind, daß in der letzten Zeile der Matrix ausschließlich Grund-Moduln und in allen vorhergehenden Zeilen ausschließlich Erweiterungs-Moduln angeordnet sind, wobei die Erweiterungsausgängen der Koppel-Moduln jeweils mit der Ersteingängen der Koppel-Moduln in der folgenden Spalte verbunden sind und die Erstausgänge der Erweiterungs-Moduln jeweils mit den Erweiterungseingänge der Koppel-Moduln in der folgenden Zeile verbunden sind, wobei die Koppel-Moduln jeweils ersteingangsseitig zum Zwecke einer Wegauswahl ein Kopfin-formations-Filter aufweisen und die Grund-Moduln jeweils eine Speicherfunktion enthalten.

Ein zentrales Element zukünftiger ATD-Breitbandnetz ist der Vermittlungknoten. Da sich die notwendige Größe von Vermittlungsknoten durch wachsenden Verkehr und neue Anwendungen ändern kann, besteht die Forderung nach einer einfachen Erweiterbarkeit von Vermittlungsknoten.

Ein Lösungsvorschlag zum modularen Aufbau eines Vermittlungsknotens (hier: KO-Switch) ist in "IEEE Journal on selected areas in communications", vol. SAC-5, No. 8, October 1987, S. 1274-1283 beschrieben. Dieser Vorschlag wir in der folgenden Beschreibung mit dem Koppelnetz gemäß der Erfindung verglichen.

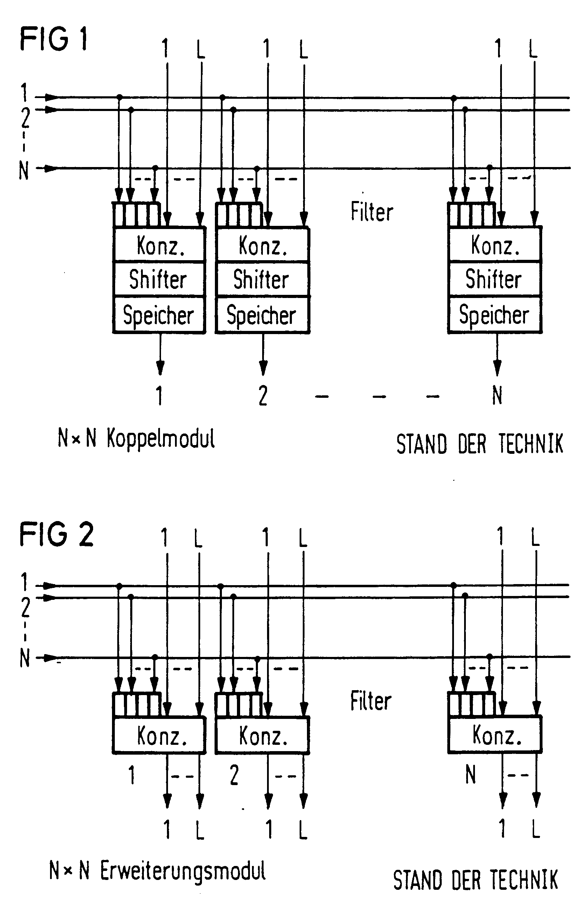

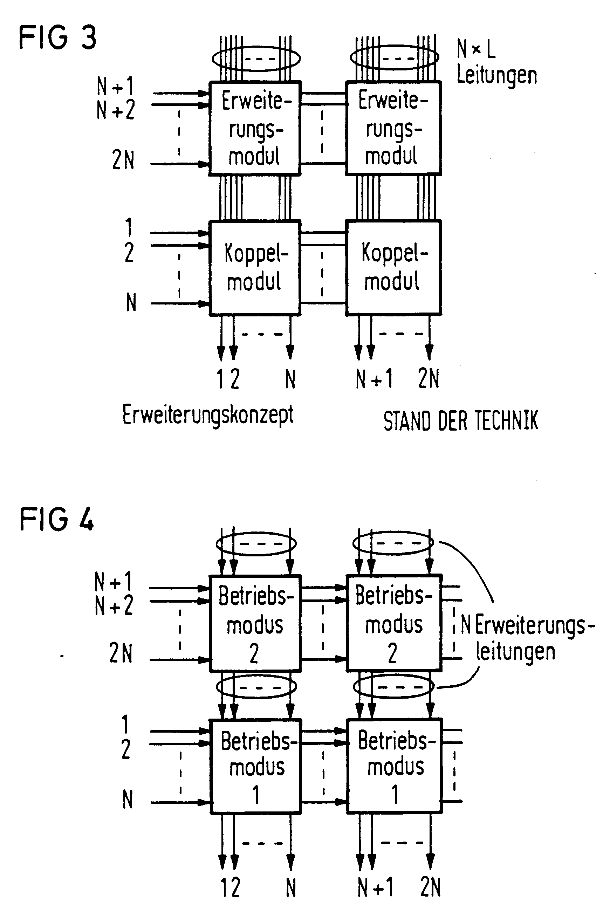

Das bekannte Erweiterungskonzept basiert auf dem sog. KO-Switch als Beispiel für einen Breitbandverittlungsknoten. Ein N x N Koppel-Modul (Fig. 1) besteht dabei aus N Bus-Schnittstellen (eine für jeden Ausgang), die jeweils Filter, Konzentrator, Shifter und Speicher beinhalten. Angeschlossen sind N Leitungen. Zusätzlich sind N x L Erweiterungseingänge, die an den Konzentrator führen, vorgesehen. Bei einer Erweiterung auf 2N Ein- und Ausgänge ist zusätzlich ein weiteres solches Koppel-Modul erforderlich. Außerdem sind zwei Koppel-Moduln, deren Bus-Schnittstellen nur Filter und Konzentrator enthalten (Fig. 2), erforderlich. Zwischen den (Erweiterungs-) Stufen sind je Ausgang L Zwischenleitungen erforderlich. Die Größe von L hängt dabei von der auftretenden Verkehrslast und der geforderten Verlustwahrscheinlichkeit ab. (z. B. ist L = 8 bei 90 % Verkehrslast und einer Paket-Verlustwahrscheinlichkeit von 10⁻⁶, vergl. Bild 5 in der genannten Druckschrift). Die Gesamtzahl der Leitungen zwischen zwei Koppel-Moduln beträgt damit N x L (Fig. 3).

Der vorliegenden Erfindung liegt die Aufgabe zugrunde, ein Koppelnetz der eingangs genannten Art zu schaffen, das ein Erweiterungskonzept bei stark verringerter Komplexität der Komponenten und erhöhter Anzahl der zu vermittelnden Leitungen gestattet, wobei nur ein einziger Typ von Koppel-Modul erforderlich sein soll.

Zur Lösung dieser Aufgabe wird ein Koppelnetz gemäß dem Oberbegriff des Patentanspruchs 1 vorgeschlagen, das durch die angegebenen kennzeichnenden Merkmale des Patentanspruchs 1 charakterisiert ist.

Vorteilhafte Weiterbildungen der Erfindung sind durch die in den Unteransprüchen angegebenen Merkmale gekennzeichnet.

Im folgenden wird die Erfindung anhand mehrerer Figuren beschrieben.
- Fig. 1: zeigt einen N x N Koppel-Modul nach dem Stand der Technik.
- Fig. 2: zeigt einen N x N Erweiterungs-Modul nach dem Stand der Technik.
- Fig. 3: zeigt ein Blockschaltbild, aus dem ein bekanntes Erweiterungskonzept hervorgeht.
- Fig. 4: zeigt ein Blockschaltbild, aus dem das erfindungsgemäße Erweiterungskonzept hervorgeht.

Das in folgenden beschriebene Erweiterungskonzept, das eine Aufteilung der Vermittlungsfunktion im Koppelfeld auf Vor- und Endvermittlungs-Moduln vorsieht, ist nicht nur - wie dargestellt - auf Koppelarchitekturen mit Ausgangsspeichern, sondern auch auf Koppler mit Eingangsspeichern und Zentralspeicher anwendbar.

Die Realisierung der Vor- und Endvermittlungs-Moduls kann mit einem einzigen VLSI-Baustein erfolgen. Dieser weist zwei unterschiedliche, von außen einstellbare Betriebsmodi auf. Im Betriebsmodus 1 arbeitet der Chip als Endvermittlungs-Modul, im Betriebsmodus 2 erfüllt er eine Vorvermittlungs-Funktionen.

Bei einer Erweiterung von N auf 2N Leitungen setzt man neben einen Vermittlungschip, der im Betriebsmodus 1 (Endvermittlung) arbeitet, einen weiteren solchen und darüber je einen Vermittlungschip, der in Betriebsmodus 2 (Vorvermittlung) arbeitet. Die jeweils untersten Chips pro Spalte arbeiten also im Betriebsmodus 1, alle anderen Chips der Koppelmatrix im Betriebsmodus 2.

Chips in Betriebsmodus 2 (Vorvermittlung) arbeiten folgendermaßen:
Pakete, die über die Eingangsleitungen des Chips ankommen, werden daraufhin geprüft, ob sie zu einem diesem Chip zugeordneten Koppelfeldausgang gehören. Wenn dies der Fall ist, werden die Pakete in einem Speicher abgelegt. Pakete mit anderer Ausgangsadresse werden an die nächste Chipspalte weitergeleitet. Über Erweiterungsleitungen ankommende Pakete sind schon vorvermittelt und werden in dem Speicher abgelegt.

Das Auslesen aus dem Speicher auf die Ausgangsleitungen erfolgt zyklisch, so daß die Ausgangsleitungen gleichmäßig mit Paketen, die die zugehörige Spaltenadresse tragen, belegt sind. Pro Pakettakt können somit bis zu N Pakete gleichzeitig aus dem Speicher ausgelesen und zum nächsten Chip übertragen werden. Dieses Verfahren wird als "Multipipeprinzip" bezeichnet.

Chips in Betriebsmodus 1 (Endvermittlung) arbeiten folgendermaßen:
Pakete, die über die Eingangsleitungen ankommen und die richtige Spaltenadresse tragen, sowie alle über Erweiterungsleitungen ankommende Pakete, werden gespeichert und auf die endgültigen Koppelfeldausgänge entsprechend der mitgeführten Adresse vermittelt.

Im einzelnen ist erfindungsgemäß vorgesehen, daß statt der zwei Typen von Koppel-Moduln ein einziger Typ von Koppel-Modul mit Speicherfunktion vorgesehen ist, der durch zwei verschiedene Betriebsmodi M1, M2 als Vorvermittlungs-Modul oder als Endvermittlungs-Modul betreibbar ist und N Ersteingänge, N Erweiterungseingänge, N Erstausgänge und N Erweiterungsausgänge hat. Ein erster Betriebs-Modus M1 realisiert die Funktion des Koppel-Modus als Endvermittlungs-Modus zum Vermitteln von N Ersteingangs-Leitungen und N Erweiterungseingangs-Leitungen auf N Erstausgangs-Leitungen, und ein zweiter Betriebsmodus M2 realisiert die Funktion des Koppel-Modus als Vorvermittlungs-Modus zum Vorvermitteln von N Ersteingangs-Leitungen und zum Durchschalten von N Erweiterungseingangs-Leitungen. Der als Vorvermittlungs-Modul arbeitende Koppel-Modul kann 2N Pakete gleichzeitig einlesen und N Pakete gleichzeitig auslesen. Der als Vorvermittlungs-Modus arbeitende Koppel-Modul verarbeitet mit seinem Kopfinformations-Filter KF nur einen Teil der Kopfinformation zum Vermitteln der Pakete zu der betreffenden Koppel-Matrixspalte, so daß die Leitungen der Matrixspalte von Paketen für diese Matrixspalte gemeinsam genutzt werden. Zur Vermeidung von sog. Paketüberholungen wird die zeitliche Reihenfolge von jeweils auf einer der N Ersteingangs-Leitungen des als Vorvermittlungs-Moduls arbeitenden Koppel-Moduls eintreffenden Paketen fallweise durch eine räumliche Ordnung auf den N Erstausgangs-Leitungen des als Vorvermittlungs-Moduls arbeitenden Koppel-Moduls ersetzt. Der als Endvermittlungs-Modul arbeitende KoppelModul kann 2N Pakete gleichzeitig einlesen. Der als Endvermittlungs-Modul arbeitende Koppel-Modul verarbeitet mit seinem Kopfinformations-Filter KF einen anderen Teil der Kopfinformation zum endgültigen Vermitteln auf einen Matrixausgang.

Die zeitliche Reihenfolge von Paketen, die in dem Fall verloren geht, in dem Pakete in einem einzigen Pakettakt aus dem Speicher SP des Vorvermittlungs-Moduls VVM ausgelesen werden, wird durch die räumliche Ordnung derart ersetzt, daß das zuerst in den Speicher eingelesene Paket über diejenige Erstausgangs-Leitung ausgegeben wird, die die höchste Priorität besitzt, d. h. diejenige Leitung, die in der nächsten betreffenden Zeile des Koppelnetzes vom Speicher des betreffenden Koppel-Moduls als erste von allen N Erweiterungseingangs-Leitungen abgearbeitet wird, das zweite Paket über die Erstausgangs-Leitung mit der zweithöchsten Priorität ausgegeben wird usf., wodurch die zeitliche Reihenfolge der Pakete wiedergewonnen wird.

Der Koppel-Modul weist eine Logikschaltung auf, die über zumindest einen externen Steueranschluß den ersten Betriebsmodus M1 oder den zweiten Betriebs-Modus M2 einstellen kann.

Die räumliche Ordnung wird mittels einer Logikschaltung, die dem Speicher in dem betreffenden Koppel-Modul zugeordnet ist, erzeugt.

Die auf den Eingangsleitungen mit unterschiedlichen Paket-Phasen eintreffenden Pakete werden vor deren Bearbeitung in dem betreffenden Koppel-Modul in eine gemeinsame Paket-Phasenlage gebracht.

## Patentansprüche

1. Modular erweiterbares digitales einstufiges Koppelnetz in ATM (Asynchronous Transfer Mode) -Technik für eine schnelle paketvermittelte Informationsübertragung, mit zwei Typen von vollvermittelnden Koppel-Moduln, nämlich Grund- und Erweiterungs-Moduln, die jeweils mit einer Vielzahl N von Ersteingängen, einer Vielzahl N x L von Erweiterungseingängen, einer Vielzahl N bzw. N x L von Erstausgängen und einer Vielzahl N von Erweiterungsausgängen versehen sind, wobei die Koppel-Moduln matrixförmig derart angeordnet sind, daß in der letzten Zeile der Matrix ausschließlich Grund-Moduln und in allen vorhergehenden Zeilen ausschließlich Erweiterungs-Moduln angeordnet sind, wobei die Erweiterungsausgänge der Koppel-Moduln jeweils mit den Ersteingängen der Koppel-Moduln in der folgenden Spalte verbunden sind und die Erstausgänge der Erweiterungs-Moduln jeweils mit den Erweiterungseingängen der Koppel-Moduln in der folgenden Zeile verbunden sind, wobei die Koppel-Moduln jeweils ersteingangsseitig zum Zwecke einer Wegauswahl ein Kopfinformations-Filter aufweisen und die Grund-Moduln jeweils eine Speicherfunktion enthalten,
**dadurch gekennzeichnet,** daß statt der zwei Typen von Koppel-Moduln ein einziger Typ von Koppel-Modul mit Speicherfunktion vorgesehen ist, der durch zwei verschiedene Betriebsmodi (M1, M2) als Vorvermittlungs-Modul oder als Endvermittlungs-Modul betreibbar ist und N Ersteingänge, N Erweiterungseingänge, N Erstausgänge und N Erweiterungsausgänge hat, wobei ein erster Betriebs-Modus (M1) die Funktion des Koppel-Moduls als Endvermittlungs-Modul zum Vermitteln von N Ersteingangs-Leitungen und N Erweiterungseingangs-Leitungen auf N Erstausgangs-Leitungen und ein zweiter Betriebsmodus (M2) die Funktion des Koppel-Moduls als Vorvermittlungs-Modul zum Vorvermitteln von N Ersteingangs-Leitungen und zum Durchschalten von N Erweiterungseingangs-Leitungen realisiert, wobei der als Vorvermittlungs-Modul arbeitende Koppel-Modul 2N Pakete gleichzeitig einlesen kann und N Pakete gleichzeitig auslesen kann und wobei der als Vorvermittlungs-Modul arbeitende Koppel-Modul mit seinem Kopfinformations-Filter (KF) nur einen Teil der Kopfinformation zum Vermitteln der Pakete zu der betreffenden Koppel-Matrixspalte verarbeitet, so daß die Leitungen der Matrixspalte von Paketen für diese Matrixspalte gemeinsam genutzt werden und wobei zur Vermeidung von sog. Paketüberholungen die zeitliche Reihenfolge von jeweils auf einer der N Ersteingangs-Leitungen des als Vorvermittlungs-Modul arbeitenden Koppel-Moduls eintreffenden Paketen fallweise durch eine räumliche Ordnung auf den N Erstausgangs-Leitungen des als Vorvermittlungs-Modul arbeitenden Koppel-Moduls ersetzt wird, daß der als Endvermittlungs-Modul arbeitende Koppel-Modul 2N Pakete gleichzeitig einlesen kann und daß der als Endvermittlungs-Modul arbeitende Koppel-Modul mit seinem Kopfinformations-Filter (KF) einen anderen Teil der Kopfinformation zum endgültigen Vermitteln auf einen Matrixausgang verarbeitet.

2. Koppelnetz nach Anspruch 1,
**dadurch gekennzeichnet,** daß die zeitliche Reihenfolge von Paketen, die in dem Fall verloren geht, in dem Pakete in einen einzigem Pakettakt aus dem Speicher (SP) des als Vorvermittlungs-Modul arbeitenden Koppel-Moduls ausgelesen werden, durch die räumliche Ordnung derart ersetzt wird, daß das zuerst in den Speicher eingelesene Paket über diejenige Erstausgangs-Leitung ausgegeben wird, die die höchste Priorität besitzt, d. h. diejenige Leitung, die in der nächsten betreffenden Zeile des Koppelnetzes vom Speicher des betreffenden Koppel-Moduls als erste von allen N Erweiterungseingangs-Leitungen abgearbeitet wird, das zweite Paket über die Erstausgangs-Leitung mit der zweithöchsten Priorität ausgegeben wird, usf., wodurch die zeitliche Reihenfolge der Paket wiedergewonnen wird.

3. Koppelnetz nach Anspruch 1 oder 2,
**dadurch gekennzeichnet,** daß der Koppel-Modul eine Logikschaltung aufweist, die über zumindest einen externen Steueranschluß den ersten Betriebsmodus (M1) oder den zweiten Betriebsmodus (M2) einstellen kann.

4. Koppelnetz nach Anspruch 2,
**dadurch gekennzeichnet,** daß die räumliche Ordnung mittels einer Logikschaltung, die dem Speicher in dem betreffenden Koppel-Modul zugeordnet ist, erzeugt wird.

5. Koppelnetz nach Anspruch 1,
**dadurch gekennzeichnet,** daß die auf den Eingangsleitungen mit unterschiedlichen Paket-Phasen eintreffenden Pakete vor deren Bearbeitung in dem betreffenden Koppel-Modul in eine gemeinsame Paket-Phasenlage gebracht werden.

## Claims

1. Modular expandable digital single-stage switching network in ATM (Asynchronous Transfer Mode) technology for high-speed packet-switched information transfer, having two types of fully switching switching modules, namely basic and expansion modules, which are provided in each case with a plurality N of first inputs, a plurality N x L of expansion inputs, a plurality N or N x L of first outputs and a plurality N of expansion outputs, in which the switching modules are arranged in the form of a matrix in such a way that solely basic modules are arranged in the last row of the matrix and solely expansion modules are arranged in all preceding rows, in which the expansion outputs of the switching modules are connected in each case to the first inputs of the switching modules in the following column and the first outputs of the expansion modules are connected in each case to the expansion inputs of the switching modules in the following row, in which the switching modules have in each case on the first input side a header information filter for the purpose of route selection and the basic modules contain a storage function in each case, characterized in that instead of the two types of switching modules, a single type of switching module with storage function is provided, which can be operated by means of two different operating modes (M1, M2) as pre-switching module or as final switching module and has N first inputs, N expansion inputs, N first outputs and N expansion outputs, in which a first operating mode (M1) realizes the function of the switching module as final switching module for switching N first input lines and N expansion input lines to N first output lines, and a second operating mode (M2) realizes the function of the switching module as pre-switching module for pre-switching N first input lines and for connecting through N expansion input lines, in which the switching module functioning as pre-switching module can read in 2N packets simultaneously and read out N packets simultaneously, and in which the switching module functioning as pre-switching module processes with its header information filter (KF) only a part of the header information for switching the packets to the respective switching matrix column, so that the lines of the matrix column are shared by packets for this matrix column, and in which, to avoid so-called packet overtaking, the chronological sequence of packets arriving in each case on one of the N first input lines of the switching module functioning as pre-switching module is replaced from case to case by a spatial ordering on the N first output lines of the switching module functioning as pre-switching module, in that the switching module functioning as final switching module can read in 2N packets simultaneously, and in that the switching module functioning as final switching module processes with its header information filter (KF) a different part of the header information for the final switching to a matrix output.

2. Switching network according to Claim 1, characterized in that the chronological sequence of packets, which is lost in the case where packets are read out of the store (SP) of the switching module functioning as pre-switching module in a single packet cycle, is replaced by the spatial ordering in such a way that the packet read into the store first is output via the first output line having the highest priority, that is to say the line which is processed in the next respective row of the switching network by the store of the respective switching module as the first of all N expansion input lines, the second packet is output via the first output line having the second-highest priority, and so forth, as a result of which the chronological sequence of the packets is restored.

3. Switching network according to Claim 1 or 2, characterized in that the switching module has a logic circuit which can set the first operating mode (M1) or the second operating mode (M2) via at least one external control connection.

4. Switching network according to Claim 2, characterized in that the spatial ordering is generated by means of a logic circuit assigned to the store in the respective switching module.

5. Switching network according to Claim 1, characterized in that the packets arriving on the input lines with different packet phases are brought into a common packet phase position before being processed in the respective switching module.

## Revendications

1. Réseau de couplage numérique à un étage, pouvant être étendu de façon modulaire, réalisé selon la technique ATM (Asynchronous Transfer Mode), pour une transmission rapide d'informations à commutation de paquets, comportant deux types de modules de couplage réalisant une commutation complète, à savoir des modules de base et des modules d'extension, qui sont équipés chacun d'une multiplicité N de premières entrées, d'une multiplicité N x L d'entrées d'extension, d'une multiplicité N ou N x L de premières sorties et d'une multiplicité N de sorties d'extension, et dans lequel les modules de couplage sont disposés sous forme matricielle de telle sorte que exclusivement des modules de base sont disposés dans la dernière ligne de la matrice et exclusivement des modules d'extension sont disposés dans toutes les lignes précédentes, et dans lequel les sorties d'extension des modules de couplage sont connectés respectivement à des premières entrées des modules de couplage, dans la colonne suivante, et les premières sorties des modules d'extension sont connectées respectivement aux entrées d'extension des modules de couplage dans la ligne suivante, et dans lequel les modules de couplage possèdent respectivement, du côté de leurs premières entrées, un filtre d'informations de tête pour réaliser une sélection de voies d'acheminement, et les modules de base contiennent respectivement une fonction de mémoire,
caractérisé par le fait qu'à la place des deux types de modules de couplage, il est prévu un seul type de module de couplage ayant une fonction de mémoire et qui peut fonctionner selon deux modes de fonctionnement différents (M1, M2) en tant que module de commutation préalable ou en tant que module de commutation finale et possède N premières entrées, N entrées d'extension, N premières sorties et N sorties d'extension, un premier mode de fonctionnement (M1) consistant en le fonctionnement du module de couplage en tant que module de commutation finale pour la commutation de N lignes de premières entrées et de N lignes d'entrées d'extension sur N lignes de premières sorties, et un second mode de fonctionnement (M2) consistant en le fonctionnement du module de couplage en tant que module de commutation préalable pour réaliser la commutation préalable de N lignes de premières entrées et réaliser l'interconnexion directe de N lignes d'entrées d'extension, et le module de couplage travaillant en tant que module de commutation préalable pouvant lire simultanément 2N paquets et lire simultanément N paquets et dans lequel le module de couplage travaillant en tant que module de commutation préalable traitant, avec son filtre d'informations de tête (KF), seulement une partie de l'information de tête pour la commutation des paquets en direction de la colonne concernée de la matrice de couplage de sorte que les lignes de la colonne de la matrice sont utilisées en commun par des paquets pour cette colonne de la matrice, tandis que pour éviter ce qu'on appelle des régénérations de paquets, la séquence temporelle de paquets arrivant respectivement dans l'une des N lignes de premières entrées du module de couplage travaillant en tant que module de commutation préalable est remplacée le cas échéant par une association spatiale aux N lignes des premières sorties du module de couplage travaillant en tant que module de commutation préalable, que le module de couplage travaillant en tant que module de commutation finale peut enregistrer simultanément 2N paquets et que le module de couplage travaillant en tant que module de commutation finale, traite, au moyen de son filtre d'informations de tête (KF), une autre partie de l'information de tête pour la commutation finale sur une sortie de la matrice.

2. Réseau de couplage suivant la revendication 1, caractérisé par le fait que la séquence temporelle de paquets, qui est perdue dans le cas où des paquets sont lus à une cadence unique de paquets à partir de la mémoire (SP) du module de commutation préalable, est remplacée par l'association spatiale de telle sorte que le paquet mémorisé en premier dans la mémoire est délivré par l'intermédiaire de la ligne d'une première sortie, qui possède la priorité la plus élevée, c'est-à-dire de la ligne qui est traitée, dans la ligne immédiatement suivante considérée du réseau de couplage, par la mémoire du module de couplage concerné, en tant que première de l'ensemble des N lignes des entrées d'extension, que le second paquet est délivré par l'intermédiaire de la ligne de la première sortie possédant la priorité la plus élevée en second, etc., ce qui permet de récupérer la séquence temporelle des paquets.

3. Réseau de couplage suivant la revendication 1 ou 2, caractérisé par le fait que le module de couplage comporte un circuit logique qui peut régler, par l'intermédiaire d'au moins une borne externe de commande, le premier mode de fonctionnement (M1) ou le second mode de fonctionnement (M2).

4. Réseau de couplage suivant la revendication 2, caractérisé par le fait que l'assocation spatiale est produite au moyen d'un circuit logique, qui est associé à la mémoire dans le module de couplage considéré.

5. Réseau de couplage suivant la revendication 1, caractérisé par le fait que les paquets, qui arrivent avec des phases différentes dans les lignes d'entrée, sont amenés dans une position de phase commune de paquet, lors de leur traitement dans le module de couplage considéré.
